# EUROPEAN PATENT APPLICATION

(11) **EP 1 424 842 A1**
(43) Date of publication of application: **02.06.2004**
(21) Application number: 04004012.3
(22) Date of filing: 12.10.2001
(51) Int. Cl.: H04M 3/42, H04Q 7/38

(54) **System for managing incoming calls depending on the availability of the called subscriber**

(30) Priority: 13.10.2000 EP 00203529
(62) Divisional of application: 01976050.3
(71) Applicant: Dansk Mobiltelefon I/S, 9000 Aalborg (DK)
(72) Inventor: Praestgaard, Alf, 8270 Hojbjerg (DK)
(74) Representative: Schmidt, Jens Joergen

(57) **Abstract**

The invention relates to a switchboard system for managing incoming calls to a local network of subscriber domains (SD), at least one of said subscriber domains comprising at least one mobile communication device (MD)
said switchboard system comprising or communicating with means for automatically routing an incoming call according to predefined automatic routines depending on the availability of the called subscriber.

## Description

### Field of the invention

The present invention relates to
- a telecommunication network as stated in claim 1
- a method of handling at least one incoming call as stated in claim 9
- a method of handling at least one incoming call to a least one subscriber as stated in claim 10
- a method of controlling a telecommunication network as stated in claim 11
- a method of determining availability of at least one subscriber as stated in claim 12
- a switchboard system as stated in claims 13 and 14, and a
- a method of managing subscribers as stated in claim 15.

### Background of the invention

Many methods of managing local telecommunication networks are known within prior art. Local communication networks may typically involve a fixed telephone network, each fixed telephone being arranged and addressed at a certain location within e.g. an office. Moreover, local communication networks may comprise a number of mobile telephones, typically less integrated in the system.

Recently, some techniques within the technical field offer a certain degree of integration between fixed telephones and mobile telephones in the sense that these techniques have been applied with the purpose of linking the mobile telephones to the fixed terminals e.g. by means of Bluetooth, IR linking or DECT telephones.

Generally, such communication networks lack integration in the sense that integration is primarily concentrated on linking the local system to the ambient telecommunication network.

It is an object of the invention to provide a local telecommunication network implying different types of telecommunication networks and associated communication devices.

### Summary of the invention

The invention relates to a virtual telecommunication network (VN) according to claim 1 wherein
said virtual telecommunication network (VN) is formed by a group of subscribers (SxTN1..........;VNS) of at least two different telecommunication networks (TN1, TN2),
said virtual telecommunication networks (VN) comprising availability measuring means (AMM),
said availability measuring means (AMM) being adapted for establishment of availability estimates (AE) of at least one of the virtual network subscribers (VNS) in said at least two different telecommunication network types (TN1, TN2) on the basis of control signals (TN1CS; TNC2S) provided by the control systems (TN1C; TNC2) of the said at least two telecommunication networks (TN1, TN2),
said availability measuring means (AMM) comprising interfacing means (IM) for interfacing said availability estimates (AE) to users of the virtual telecommunication network (VN).

According to the invention, the interfacing means may provide relevant availability information regarding the subscribers of the virtual local network for internal or external use. The provided information benefits from the fact that the information is provided on a control signal basis, irrespective of whether the subscriber is stationary or mobile. Therefore, no initial call to the subscriber needs to be established in order to obtain high degree of availability information.

Evidently, the degree of availability information may vary significantly within the scope of the invention. Still, it should be noted that this inherent variation of availability information increases the knowledge about the availability of a certain subscriber and under any circumstances especially in relation to determination of "unavailability". It may be very difficult to obtain absolute waterproof determination of whether a recipient is actually available at a specific time, but the obtained availability signals on the control signal level may typically be applied to determine that a subscriber is definitely not available at one or several devices associated with the subscriber under some specific circumstances.

This may e.g. be the case if the virtual telecommunication network is formed by two networks, e.g. one cellular network covering the mobile telecommunication devices of the virtual network, and one local network of fixed telecommunication devices. In this case, if it is determined that (a) the relevant subscriber is NOT present at his fixed telecommunication device and (b) his mobile telephone is switched off, no further investigation needs to be carried out as the subscriber is definitely not available.

This information is immediately useful if there is a need to determine whether one or several subscribers of the virtual network may be available, and a search for subscribers may also may narrowed down to subscribers who are immediately available.

Hence, under any circumstances, the information will increase the knowledge about the subscribers before any previous attempts to call the subscribers.

In case of an incoming call, the availability information may be applied to avoid having the calling party wait for a "long time" until it is finally determined that the subscriber has actually e.g. turned his voice mail on.

Evidently, according to the invention, further measures may be taken to verify that the subscriber may in fact be available and not just unavailable per definition.

According to the invention, availability information may be established in several different ways and with several different purposes. Availability information established on the basis of control signals provided by the control system of a certain telecommunication network may e.g. be updated continuously, irrespective of whether the relevant subscribers are called or not. Evidently, other systems may e.g. imply that the availability information related to a certain subscriber is requested subsequently to an incoming call to the addressed subscriber.

The methods applied for establishment of the availability information on the basis of the control data may be highly dependent on the relevant application, e.g. which telecommunication networks are applied? - may the relevant availability information be easily obtained?, will the transfer of availability information from the telecommunication network to the routing means, the intelligent call manager, imply heavy system load and require high bandwidth?, etc.

According to a preferred embodiment of the invention, availability information should preferably be available to the routing means shortly after an incoming call, thereby minimizing the standby time experienced by the calling party.

According to a preferred embodiment of the invention, only two telecommunication devices are associated with a subscriber, a fixed and a mobile telecommunication device.

An advantageous feature of the invention is that the virtual network of a number of subscribers may be regarded and handled as if the network comprises subscribers of only one telecommunication network. This means that typical availability information provided by traditional local analogue or digital switches may be applied, even if for instance some or all the subscribers may also be reached by means of a cellular telecommunication network.

Hence, the virtual telecommunication network offers the flexibility obtained by combination of different telecommunication networks, e.g. a fixed network and a cellular network, and the efficiency/user friendliness offered by typical local switches operating on the basis of central communication with the communication devices of the network on a control signal basis.

According to the invention, the PDT (PDT: post delay time) may typically be significantly reduced to less than five seconds and preferably less than three seconds. The PDT refers to the time during which an incoming call or an availability information requesting party must typically wait in order to be connected or receive information that no connection may be established.

Generally, according to the invention a telecommunication device includes both traditional telephony and the coming-up data transmission systems. Hence, a mobile telecommunication device may e.g. both comprise a cellular phone, a PDA or other suitable data communication devices.

When, as stated in claim 2, said interfacing means (IM) comprises at least one operator interface (OI), a further advantageous embodiment of the invention has been obtained.

According to the invention, an operator interface may e.g. comprise an availability monitoring system enabling the operator by no or very few operations to determine whether a recipient of an incoming call to the network is available or not.

Evidently, the operator interface should preferably be synchronized with further availability information, e.g. when the recipient may be expected to be available again or e.g. whether the recipient is simply busy on the line.

When, as stated in claim 3, said operator interface (OI) comprises means for establishment of monitoring signals (MS) representing availability estimates (AE) related to virtual network subscribers (VNS), a further advantageous embodiment of the invention has been obtained.

According to a preferred embodiment of the invention, the operator interface should preferably comprise means for indicating availability of the virtual network subscribers to an operator of telecommunication routing means, the routing means controlling the routing of calls and data traffic to subscribers of the virtual network.

The incoming calls may either originate from "external" calling parties or from calling parties within the virtual network. Evidently, according to a preferred embodiment of the invention, all calls to subscribers of the virtual network should be managed and thus assisted by means the established availability data.

Evidently, according to further embodiments of the invention, direct calls (also referred to as DDI: Direct Dial In) to virtual network subscribers may be made directly to a subscriber and, hence, bypass the basic function of the front end while remaining part of the traffic, e.g. incoming calls are directed to the virtual network as such under the control of the network front end of the invention.

According to the invention, monitoring signals may e.g. comprise acoustic or visual signals. The main object of these signals should (within the scope of the invention) be that of enabling a user, e.g. a virtual network operator, an external calling party, any "internal" person, i.e. a person having rightful access to the data, to take advantage of the established availability data, etc.

When, as stated in claim 4, at least one and preferably at least two telecommunication devices associated with a subscriber (VNS) of the virtual network (VN) is/are defined as a subscriber domain (SD),
said at least two telecommunication devices being a part of at least two different telecommunication networks (TN1, TN2)
said subscriber domain () being defined as a group of said at least two telecommunication devices, a further advantageous embodiment of the invention has been obtained.

According to the invention, a virtual network effectively dealing with subscribers who may be reached by two or several telecommunication networks on an individual basis offers a high degree of flexibility. Moreover, the way of establishing availability estimates and eventually routing according to those estimates facilitates meaningful and smooth incorporation of network telecommunication devices in the virtual network.

When, as stated in claim 5, at least one of said telecommunication devices of said domain comprises a mobile telecommunication device, a further advantageous embodiment of the invention has been obtained.

When, as stated in claim 6, said virtual telecommunication network (VN) comprises routing means (RM),
for routing an incoming call (IC) to at least one of the said virtual network subscribers (VNS) according to the established availability estimates (AE), a further advantageous embodiment of the invention has been obtained.

According to the invention, an incoming call to a recipient identified by the virtual networks common identifier may be routed according to availability data received from the control systems of the involved telecommunication networks or at least some of them. The availability data may e.g. comprise availability data which may be extracted from the control system of a cellular telecommunication network or e.g. from the control system of a local switch.

In this way, incoming calls to the virtual network may be routed in an advantageous and expedient way, e.g. by routing the call directly to e.g. an available mobile device of the virtual net subscriber to whom the call was originally intended or e.g. to another mobile subscriber known or expected to be available according to the availability data provided by the control systems of the involved networks or at least some of them.

In this way, irrational routing of incoming calls to the virtual network may be minimized or even completely avoided depending upon the applied availability information.

Accordingly, the invention offers a minimum of endlessly redirected calls and branching based on "we'll try to call the recipient, - if the recipient does not answer, he is probably not there and we may e.g. try to call him somewhere else".

According to the invention, availability information may be established in several different ways and with several different purposes. Availability information established on the basis of control signals provided by the control system of a certain telecommunication network may e.g. be updated continuously, irrespective of whether the relevant subscribers are called or not. Evidently, other systems may e.g. imply that the availability information related to a certain subscriber is requested subsequently to an incoming call to the addressed subscriber.

The methods applied for establishment of availability information on the basis of the control data may be highly dependent on the relevant application, e.g. which telecommunication networks are applied? - may the relevant availability information be easily obtained?, will the transfer of availability information from the telecommunication network to the routing means, the intelligent call manager, imply heavy system load and require high bandwidth?, etc.

According to a preferred embodiment of the invention, availability information should preferably be available to the routing means shortly after an incoming call, thereby minimizing the standby time experienced by the calling party.

Hence, an incoming call should preferably be provided with availability information so that unnecessary branching (routing) between a number of telecommunication devices may be avoided.

A further aspect of the invention is that incoming calls may be redirected based on a qualified guess of whether an alternative recipient other than the originally intended may actually answer the incoming call. Hence, if the recipient initially selected by the calling party is immediately considered unavailable, the call may be redirected to another person, e.g. within the same department of a called company. Still, it should be noted that the redirected call to another subscriber may be based on the availability information associated with this particular subscriber. Hence, the calling party may be redirected automatically or manually by an attendant service to a another recipient known to be available within the virtual telecommunication network.

It should, of course, be noted that the availability information of many applicable systems within the scope of the invention may not necessarily provide complete availability information. Evidently, this may basically depend upon the type of received availability information established in the control systems of the involved telecommunication networks.

Nevertheless, even primitive availability information contained in the control systems of the telecommunication systems and incorporated in a given virtual telecommunication network may improve routing of the local virtual network significantly compared with that of conventional routing networks by means of which incoming calls are often directed to unavailable subscribers.

When, as stated in claim 7, the estimates (AE) of at least one of the virtual network subscribers (VNS) in said at least two different telecommunication networks types (TN1, TN2) are made on the basis of further control signals (FAS) provided by at least one further availability measuring system (FAM), a further advantageous embodiment of the invention has been obtained.

According to the invention further availability measures may be a supplement to the measures obtained on a control signal basis directly from the involved telecommunication networks.

Further measures may e.g. be established by means of automatic measuring means associated with the stationary telecommunication devices, e.g. sensors or the like. Further measures may e.g. be information about the location of the mobile communication device of interest.

Other measures may e.g. imply scheduling systems, such as Outlook, which may be applied to determine whether the subscriber is participating in a meeting or not.

When, as stated in claim 8, said further availability measuring system (FAM) comprises means for detecting whether a subscriber is present in a certain area and within reach of a fixed telecommunication device, a further advantageous embodiment of the invention has been obtained.

According to the invention, the further availability measuring system should preferably detect automatically whether the subscriber is available at his fixed communication device and implies little or no update actions from the subscriber.

Potential relevant subscriber actions should preferably be actions routinely made by the subscriber anyway. Complicated restrictions on the movement of the subscriber or requirements to the subscriber with respect to actively signaling changed availability status should be avoided, as such systems has proved vulnerable when subscribers forget to report new status from time to time.

When, as stated in claim 9, said further availability measuring system (FAM) comprises means for detecting whether a screensaver of a work station of a subscriber is active, a further advantageous embodiment of the invention has been obtained.

When, as stated in claim 10, said interfacing means (IM) communicates with routing means (RM) for automatically switching an incoming call (IC) to one of the virtual telecommunication network subscribers (VNS) according to routing routines (RR),
said routing routines (RR) being established for routing said incoming call (IC) to one of the virtual telecommunication network subscribers (VNS) on the basis of recipient identifying information (RII) and said availability estimates (AE), a further advantageous embodiment of the invention has been obtained.

According to a preferred embodiment of the invention, routing routines may be provided to guide an incoming call to an identified virtual network on to a specific or relevant subscriber of the virtual network. Evidently, according to a preferred embodiment of the invention, the routing of a call to a subscriber of the network should preferably be based on information describing the intended recipient or it may even specify the exact intended recipient. This information, more or less attached to the incoming call, should be compared with the established availability information prior to any routing, thereby avoiding or at least reducing the number of calls directed to unavailable recipients. Moreover, the availability information should be provided to re-route calls to other recipients appearing to be available if the calling party requests such re-routing.

Evidently, according to a preferred embodiment of the invention, such re-routing may be result in an effective "find the man" or "find a certain type of man" as routing to unavailable subscribers may be avoided, even when/if the recipient also includes a mobile telecommunication device in his subscriber domain.

When, as stated in claim 11, said routing routine (RR) is executed automatically by means of data processing means (DPM), a further advantageous embodiment of the invention has been obtained.

According to one embodiment of the invention, routing routines executed by data processing may e.g. be provided to simply determine a subscriber of the virtual network from information attached to an incoming call and pass the call on to a supposedly available telecommunication device associated with the relevant subscriber.

When, as stated in claim 12, said routing routine (RR) is executed by at least one attendant by means of said operator interface (OI), a further advantageous embodiment of the invention has been obtained.

According to a further embodiment of the invention, the routing routines may be advantageously managed by one or several operators. Evidently, such routing routines may e.g. imply that choices or searches to be made by an operator of the system may be supported by relevant filters, routing suggestions, etc.

When, as stated in claim 13, said availability estimates (AE) are updated according to update routines (UR), a further advantageous embodiment of the invention has been obtained.

According to the invention, update routines should provide relevant control under certain conditions from which the availability estimates may be deduced.

When, as stated in claim 14, said update routines (UR) involve regular polling of control signals (T'N1CS; TNC2S) provided by the control systems (TN1C; TNC2) of the said at least two telecommunication networks (TN1, TN2), a further advantageous embodiment of the invention has been obtained.

According to the invention, the polling of control signals from the control systems of the relevant telecommunication networks may be performed upon request by the availability measuring means. Hence, according to a preferred embodiment of the invention, the control signals are regularly retrieved from the control system thereby ensuring that the availability estimates are always "fresh". The "fresh" availability estimates may e.g. be advantageous in relation to call routing. Incoming calls to a virtual network may thus be routed more or less instantly without any significant delay.

Hence, according to a preferred embodiment of the invention, availability estimates should preferably be established prior to potential incoming calls or availability requests to the virtual network, thereby facilitating instant routing or instant availability monitoring of a subscriber or a group of virtual network subscribers according to already established availability measures.

Hence, according to a preferred embodiment of the invention, availability estimates should preferably be updated frequently and established so often that most inquiries to subscriber availability may be responded to immediately and with sufficiently updated estimates.

Accordingly, so-called post delay time, also referred to as PST within the art, may be minimized.

When, as stated in claim 15, said update routines are determined by predefined schedules, a further advantageous embodiment of the invention has been obtained.

According to the invention, the polling for control data may be performed at regular predefined intervals. Moreover, also according to the invention, the polling may also be performed at different intervals depending on the load or load estimates of the virtual network.

Evidently, within the scope of the invention, updating of availability estimates may be performed in numerous ways.

It should, of course, be noted that updating of availability data according to the invention is basically established on the basis of control data, which, when compared with traditional "call based" availability measures, may be retrieved with relatively little data transfer and data processing, both with respect to communication with a potential remote control system and with respect to the required data processing of the remote control system. It should be noted that availability data of e.g. cellular networks are typically inherent.

When, as stated in claim 16, said update routines (UR) are initiated upon a request by control signals (TN1CS; TNC2S) associated with one or several specified subscribers, a further advantageous embodiment of the invention has been obtained.

According to a further embodiment of the invention, the availability of subscribers may advantageously be established subsequent to an availability request under certain conditions. In this way, the processing of availability estimates may be minimized. Relevant "certain conditions" may e.g. be if a certain virtual network subscriber or a group of subscribers is low-frequently accessed or called.

Thus, an availability request may e.g. be an incoming call to an identified subscriber of the virtual network. When this request has been recorded, a request for control signals related to the identified subscriber (and eventually further subscribers at the same time) may be established, the response from the relevant control systems may be retrieved and an availability estimate of the relevant (and eventually further) subscriber (s) may be established on the basis of such retrieved control signals.

When, as stated in claim 17, the destination of an incoming call (IC) to a subscriber of the virtual network (VN) is partly defined by a virtual network identifier (VNID), identifying the virtual network (VN) and partly defined by manual communication between the calling party (CP) and at least one operator of the virtual telecommunication network (VN), a further advantageous embodiment of the invention has been obtained.

According to a preferred embodiment of the invention, a virtual telecommunication network should typically be controlled by manually operated routing and availability measuring means. In this way, an attendant of a switchboard controlling the virtual network may apply relevant, monitored availability information associated with subscribers of the network for directing e.g. incoming calls to virtual network subscribers in a smooth and intuitive way. Hence, the invention may support the handling of call routing within the virtual network on the basis of the established availability estimates.

An example of such routing may e.g. be an incoming call received by an operator who immediately informs the calling party that the intended recipient in not available in said at least two different telecommunication networks, e.g. by a fixed and a cellular phone.

Moreover, the operator may possibly offer the calling party more detailed information related to the established unavailability and then offer the calling party to have the call re-routed to other relevant subscribers of the virtual network who have been determined to be not unavailable.

When, as stated in claim 18, said manual communication is established by means of automated means for providing virtual network subscriber information to the calling party, a further advantageous embodiment of the invention has been obtained.

According to a further embodiment of the invention, communication between a calling party, or an availability information requester, and virtual network control may be performed on a partly or completely automated basis. The automated means should then offer the recorded availability information and preferably suggest further options for automatic re-routing of the call.

When, as stated in claim 19, the destination of an incoming call (IC) to a subscriber of the virtual network (VN) is partly defined by a virtual network identifier (VNID) identifying the virtual network (VN) and partly defined by a further virtual telecommunication network subscriber identifier (VSID) enabling automatic routing by the routing means (RM) to said identified virtual telecommunication network subscriber (VS), a further advantageous embodiment of the invention has been obtained.

A virtual network according to the invention offers both at least one common gateway to the virtual network and possible direct routing to a virtual network subscriber.

A typical common gateway may e.g. be a company main telephone number, or a list of telephone numbers addressing departments of the company.

Hence, a calling party may choose both to approach a subscriber of a virtual network via one or a number of gateways to a bundle of the virtual network subscribers or directly by means of a direct call. In this way, a calling party may both take advantage of specific knowledge about a virtual network subscriber telephone number, a DDI or he may choose to address a company main number or department number and expect to be guided to the intended recipient.

When, as stated in claim 20, said virtual network identifier (VNID) comprises a telephone number associated with said virtual telecommunication network (VN), a further advantageous embodiment of the invention has been obtained.

According to an advantageous embodiment of the invention, the virtual network identifier may typically comprise a telephone number.

When, as stated in claim 21, said further virtual telecommunication network subscriber identifier (VSID) comprises an extension telephone number, a further advantageous embodiment of the invention has been obtained.

According to further embodiments of the invention, the further virtual telecommunication network subscriber identifier may e.g. constitute an extension number included or added to the virtual network identifier, e.g. an extension telephone number.

When, as stated in claim 22, said at least one virtual telecommunication network subscriber identifier (VSID) is established manually by an operator of an operator interface (OI), a further advantageous embodiment of the invention has been obtained.

According to the invention, an operator interface may e.g. comprise a manually operated switchboard, an attendant console. An attendant of the switchboard may receive the incoming call identified by the ID of the virtual network and may subsequently direct the incoming call to the relevant recipient of the virtual network based on instructions given by the calling party.

Typically, such instructions may be given orally. According to further embodiments of the invention, an operator may also direct the call according to an inherent virtual telecommunication network subscriber identifier.

When, as stated in claim 23, at least one of said telecommunication networks (TN1, TN2) comprises a cellular telecommunication network, a further advantageous embodiment of the invention has been obtained.

According to a preferred embodiment of the invention, the individual subscribers should preferably/initially be reachable at a "home base", e.g. a fixed standard telecommunication device or e.g. an IP based LAN telephone.

If it is established, preferably automatically or at least semi-automatically, that a subscriber has left his "home base", calls should preferably be directed to one or several mobile devices associated with the subscriber. Subsequently, availability information contained in the cellular network serving the relevant mobile device may indicate or determine that the subscriber may even not be reached by means of the subscriber's mobile device(s) provided to the routing means, i.e. the intelligent call manager, so that unnecessary attempts of routing the incoming call to the intended recipient is avoided.

In this way, superfluous traffic in the virtual network may be avoided.

When, as stated in claim 24, at least one of said telecommunication networks (TN1, TN1) comprises fixed telephones, a further advantageous embodiment of the invention has been obtained.

According to the invention, fixed telephones may advantageously comprise one of the telecommunication network devices offered to the subscribers of a virtual network. A fixed telephone may e.g. comprise a standard stationary analogue or digital telephone. Such telephones are already present and available in most local telecommunication networks.

According to the invention, a wireless DECT-telephone may typically be regarded as a fixed telephone in the sense that the telephone must basically be reached via a local stationary wireless link-establishing station.

When, as stated in claim 25, at least one of said telecommunication networks (TN1, TN1) comprises LAN telephones, a further advantageous embodiment of the invention has been obtained.

According to the invention, LAN (LAN:Local Area Network) telephones may also be regarded as a kind of fixed telephones.

The LAN telephones applying packet-coupled transmission may be regarded as a very likely alternative or supplement to traditional telephones in the future in the sense that an internal network may be reduced to comprise only one main network, i.e. a network applied for both linking computers and telephones together.

When, as stated in claim 26, at least one of said telecommunication networks (TNET) is established by at least one local switch, a further advantageous embodiment of the invention has been obtained.

According to the invention, one of the telecommunication networks may advantageously comprise a traditional local network established by an analogue PBX or a digital LAN-PBX.

When, as stated in claim 27, said at least one switch comprises a digital switch, a further advantageous embodiment of the invention has been obtained.

When, as stated in claim 28, said at least one switch comprises an analogue switch, a further advantageous embodiment of the invention has been obtained.

According to a further advantageous embodiment of the invention, even an old-fashioned analogue switch may be incorporated to define one of the telecommunication networks of the virtual network. For this purpose, a control signal interface must be established from the analogue switch to the virtual network availability measuring means (AMM). When this interface is established and certain availability measures have been transferred to the virtual network availability measuring means (AMM), the local network may be easily combined with e.g. a mobile network.

When, as stated in claim 29, said routing means (RM) interacts with a scheduling routine (SR), a further advantageous embodiment of the invention has been obtained.

According to the invention, a scheduling routine may advantageously be a supplement to the availability estimates in comparison with e.g. calendar data processing routines.

An availability estimate may e.g. keep track of meetings, holidays, sick days etc. and be a supplement as such to the already established availability measures.

An availability estimate may also be a supplement to already obtained availability information. Hence, unavailability may e.g. be explained by information kept in a calendar. Such information may e.g. be provided to a calling party, thereby improving the calling party's ability to decide whether to e.g. leave a message, to make another call within a period certain time or to have the call directed to another subscriber.

When, as stated in claim 30, at least one subscriber domain (SD) comprises telecommunication devices () associated with a person, a further advantageous embodiment of the invention has been obtained.

According to the invention, one person may advantageously be reached by more than one telecommunication device, or more specifically, one person should preferably be reachable by at least two telecommunication network devices.

An example of a very advantageous setup is that of a subscriber who is reachable by both a stationary telecommunication device and a mobile telecommunication device, thereby obtaining a maximum of flexibility in most real virtual network setups. Hence, if the subscriber cannot be reached by means of one, e.g. a fixed device of his domain, he may e.g. be reached by an alternative device, preferably mobile device. Moreover, according to a very much preferred embodiment of the invention, switching between the telecommunication devices of a subscriber domain may be performed on the basis of availability estimates obtained by a control signal level in at least two of the involved networks. This feature facilitates a very short post delay time, PDT, which may often be reduced to almost zero (with respect to internal routing in the virtual network) even if the telecommunication networks involved in the virtual network are traditionally of very different.

Hence, a cellular telecommunication network is typically required to offer quite sophisticated availability control signals of which it is capable practically by nature (e.g. IDLE/not-IDLE; device ON/-OFF, device reachable or not, where is the device etc.), while e.g. local analogue local switches may e.g. only (but absolutely sufficient control data for controlling the virtual network) provide control data to determine whether the relevant subscriber is idle or not.

When, as stated in claim 31, at least one subscriber domain (SD) comprises telecommunication devices () associated with a group of persons, a further advantageous embodiment of the invention has been obtained.

A group of persons may e.g. comprise a department of a company, a service group, etc.

When, as stated in claim 32, at least one subscriber domain (SD) is dynamically changed according to subscriber defining schedules (SDS), a further advantageous embodiment of the invention has been obtained.

According to the invention, subscriber domains may change dynamically over time. Such a change may typically relate to individual subscribers and determine that the number of devices included in the subscriber domain vary according to the subscriber defining schedules. However, the subscriber defining schedules may also be applied to define groups of subscribers.

When, as stated in claim 33, at least one subscriber domain (SD) is controlled according to predefined subscriber domain handling routines (SDHR), a further advantageous embodiment of the invention has been obtained.

Subscriber domain handling routines according to the invention may be applied for handling or defining the understanding of availability associated with all or individual subscriber domains. Evidently, such subscriber domain handling routines may be applied to define one common approach with respect to all or groups of subscriber domains if so desired. However, subscriber-handling routines may also be applied to handle the subscriber domains on an individual basis.

When, as stated in claim 34, said system comprises an individual user configuration (IUC) which may be applied for individual subscriber setups of subscriber domains (SD), a further advantageous embodiment of the invention has been obtained.

According to the invention, a subscriber user configuration may comprise configuration tables according to which an individual subscriber may determine certain detailed subscriber domain-related properties of his own subscriber domain. The configuration tool may e.g. be directed at handling calls to a mobile device since a mobile device is typically a very personal device and may follow the subscriber all day, all week, etc.

Hence, according to an embodiment of the invention, the configuration tool facilitate that one telephone number may be handled both as if it is a private number or as if it is a "at work" number.

When, as stated in claim 35, a subscriber may determine a triggering event (TE), which results in an incoming call being directed to a certain destination (DEST) when established, a further advantageous embodiment of the invention has been obtained.

When, as stated in claim 36, the triggering event may automatically be measured by measuring means associated with the intelligent virtual network manager IVNM, a further advantageous embodiment of the invention has been obtained.

The invention relates to a telecommunication network according to claim 37, said network comprising at least one subscriber (S1,..,S4), said at least one subscriber (S1,..,S4) being associated with a subscriber domain (SD1,..SD4) comprising
at least one fixed telephone device (FT) and at
least one mobile telecommunication device (MD) said network comprising means (ICM) for determining availability of at least one said fixed telephone means (FT) and at least one mobile communication device (MD) associated with at least one of the subscribers (S1,..,S4).

According to the invention, a subscriber domain should typically be regarded as a combination of at least one fixed network-based device and at least one cellular network device.

The association of subscribers in a "local" network comprising a number of subscriber domains managed by an intelligent call manager may be regarded as a virtual "local" network as the telecommunication devices of the subscriber domains are in fact not local. The fixed telephone devices may often and sometimes preferably be perceived as a local network of fixed devices associated with mobile devices that are in no way local due to the mobile nature of the devices. Nevertheless, the intelligent call manager may administer the devices in a such a way that the ambient calling party may perceive the network to be completely integrated between the fixed network and the mobile network.

A fixed telephone device may e.g. be a standard wired telephone, a DECT telephone, a LAN-PBX telephone or the like.

A mobile telecommunication device may e.g. be a mobile telephone operated by a GSM-, a GPRS, a UMTS network, NMT,.. etc. Evidently, the mobile telephones may e.g communicate by means of WAP or I-mode protocol.

Typically, a virtual "local" network may be a telecommunication network covering a company, a business unit or equivalents. The systems may advantageously (but not necessarily) be of a dimension which may be serviced by a manually operated attendant service due to the fact that especially a manually operated attendant service may benefit from the provided availability information.

When, as stated in claim 38, at least one of said subscriber domains comprises at least one mobile communication device or at least one fixed telecommunication device, a further advantageous embodiment of the invention has been obtained.

According to the above-mentioned embodiment of the invention, a virtual "local" network comprising at least one domain, comprising at least one fixed telecommunication device and at least one mobile telecommunication device, may be supplemented by additional domains comprising fixed telecommunication devices or mobile telecommunication devices.

Still, the complete "local" virtual network should preferably comprise subscriber domains which may all be checked for availability by the intelligent call manager.

The means (ICM) for determining availability of at least one of said fixed telephone means (FT) and at least one mobile communication device (MD) associated with said at least one subscriber (S1,..,S4) may also be regarded as an intelligent call manager in some aspects.

When, as stated in claim 39, said means (ICM) for determining availability of at least one of said fixed telephone means (FT) comprises means for checking at least one register (REG2) associated with said fixed telephone means (FT1, FT2), a further advantageous embodiment of the invention has been obtained.

Evidently, information about the availability of fixed telephone means may be registered and stored in numerous ways, e.g. in relational databases, registers dedicated solely to a specific device, etc.

When, as stated in claim 40, said availability of at least one subscriber (S) at an associated fixed telephone device is established partly or completely by means of a detection arrangement, a further advantageous embodiment of the invention has been obtained.

A possible detection arrangement within the scope of the invention may e.g. be established by means of screensaver detection on a PC serving as a LAN-PBX telephone. If the screensaver is activated, the ICM may suppose that the subscriber has left the his PC, and the state of the LAN-PBX may be registered as not available. Consequently, an incoming call should be directed to another available telecommunication device within the subscriber's domain.

Other possible detection and amusing arrangements within the scope of the invention may e.g. be a sensor mounted in the chair of the subscriber.

When, as stated in claim 41, the means (ICM) for determining availability of at least one mobile communication device (MD) associated with at least one subscriber (S1,..,S4) comprises means for accessing availability codes (A-code) comprised by the mobile network, a further advantageous embodiment of the invention has been obtained.

When, as stated in claim 42, said availability codes (A-codes) are comprised by a Home Location Register (HLR) of a GSM-network, a further advantageous embodiment of the invention has been obtained.

Evidently, many possible availability codes may be applicable within the scope of the invention, and they may have many names varying from network to network. According to a GSM network application, the availability codes (A-codes) of a mobile device may be e.g. codes determining reachability/non-reachability, or attached/de-attached and status codes.

The status code may e.g. be A Busy; subscriber busy and calling party, B Busy; subscriber Busy - not the calling party, IDLE; subscriber is idle, Fault; subscriber is in fault mode, TEST; subscriber is in test mode.

When, as stated in claim 43, availability is weighted by further availability parameters, a further advantageous embodiment of the invention has been obtained.

According to the invention, further availability parameters may e.g. be Outlook imported data supplementing the measured fixed and mobile availability with the schedules of the subscriber. A further parameter may e.g. office opening hours.

The availability may then be presented to a calling party or to a switchboard system operator in a more or less fancy manner or e.g. applied for automatically routing a signal to devices in the subscriber domains.

It should be emphasized that the availability may be presented to the user/calling party in several possible ways without deviating from the spirit of the invention.

One preferred embodiment of the invention implies that the possible subscriber domain states are divided into three possible states, green: the subscriber is available on the fixed or the mobile telecommunication device; yellow: the subscriber is in a meeting; red: the subscriber is neither available on the fixed telephone, nor on the mobile device.

According to further embodiments of the invention, a further state may be established indicating that the subscriber is temporarily unavailable due to the fact that he is busy on the fixed or the mobile device within his domain.

When, as stated in claim 44, the intelligent call manager (ICM) comprises display means (DM) for displaying availability of the subscribers (S1,..,S4) managed by said call manager (ICM), a further advantageous embodiment of the invention has been obtained.

The display means may be applied in various ways within the scope of the invention due to the detailed availability information provided by the invention.

Moreover, the invention relates to a method of handling at least one incoming call to a least one subscriber (S1,..,S4) as stated in claim 45, said method comprising the steps of
- determining availability of said at least one subscriber (S1,..,S4) on at least one fixed telephone (FT) according to at least one availability criterion (AC)
- routing the incoming call to the at least one fixed telephone (FT) of said at least one subscriber (S1,..,S4) if the subscriber is available on the at least one fixed telephone (FT),
- determining availability of said at least one subscriber (S1,..,S4) on at least one mobile telephone (MD) according to at least one further availability criterion (FAC) if the subscriber is not available on the at least one fixed telephone (FT),
- routing the incoming call to the at least one mobile device (MD) of the subscriber (S1,..,S4) if the subscriber is available on the at least one mobile device (MD).

Moreover, the invention relates to a method of handling at least one incoming call to said a least one subscriber (S1,..,S4) as stated in claim 46, said method comprising the steps of
- determining availability of said at least one subscriber (S1,..,S4) on the at least one fixed telephone (FT) according to at least one availability criterion (AC)
- determining availability of said at least one subscriber (S1,..,S4) on at least one mobile telephone (MD) according to at least one further availability criterion (FAC) if the subscriber is not available on the at least one fixed telephone (FT),
- routing the incoming call to the device on which the subscriber is available.

Moreover, the invention relates to a method of controlling a telecommunication network (S1,..,S4) as stated in claim 47, said method comprising the step of
- directing an incoming call to a subscriber domain (SD) and to an available device (FT, MD) within the domain.

Moreover, the invention relates to a method of determining availability of said at least one subscriber (S1,..,S4) as stated in claim 48, said at least one subscriber (S1,..,S4) defining a subscriber domain comprising at least one fixed telephone (FT) and at least one mobile communication device (MD)
said method comprising the steps of
(a) determining availability of said at least one subscriber (S1,..,S4) on at least one fixed telephone (FT) according to at least one availability criterion
(b) determining availability of said at least one subscriber (S1,..,S4) on at least one mobile communication device (MD) according to at least one additional availability criterion.

According to the invention, the availability criteria associated with the fixed telecommunication device and the additional availability criteria associated with the mobile telecommunication device may preferably comprise two different sets of parameters due to the different nature of availability of the two devices with respect to reachability and attachment.

Moreover, the invention relates to a switchboard system as stated in claim 49 for monitoring availability of said at least one subscriber dedicated to a subscriber domain (SD), said subscriber domain comprising at least one mobile communication device (MD) and preferably at least one fixed telephone (FT),
said switchboard system comprising display means (DM) for displaying availability of the at least one subscriber domain (SD).

According to the invention, a switchboard system should preferably involve display means in order to facilitate manual operation of the attendant service. Such manual operation may be significantly improved in comparison with state of the art systems, according to which no detailed information with respect to availability is actually at hand.

It should be noted that display means according to the invention may display availability of the complete subscriber domain by displaying the state of each device or only the resulting state of the subscriber domain as a whole.

Moreover, the invention relates to a switchboard system as stated in claim 50 for managing incoming calls to a local network of subscriber domains (SD), said at least one subscriber domain comprising at least one mobile communication device (MD) and preferably at least one fixed telephone (FT),
said switchboard system comprising or communicating with means for routing an incoming call automatically according to predefined automatic routines depending on the availability of the called subscriber.

According to the invention, an advantageous automatic attendant service may be facilitated due to the fact that the availability of the called party, i.e. the subscriber associated with the called subscriber domain, may be determined in detail.

Moreover, the invention relates to a method of managing subscribers in a telecommunication network as stated in claim 51,
said at least one subscriber (S1,..,S4) being associated with a subscriber domain (SD1,..SD4) comprising
at least one fixed telephone device (FT) and at
least one mobile communication device (MD)
said method comprising the step of routing incoming signals from said fixed telephone device (FT) to at least one of said mobile communication devices (MD) if the fixed telephone device (FT) of a subscriber domain (SD) is unavailable.

Routing of an incoming signal to a mobile device within the same domain defined and triggered by the ICM, and the routing should typically imply release of the incoming call e.g. by means of a CC=18 code indicating that the call is made directly from the PSTN to the mobile device without occupying the transmission line to the ICM.

Other less convenient routing implies a so-called call forward indicating that the call is forwarded to the mobile device via the ICM, thereby maintaining the connecting between the ICM and the PSTN.

Unavailability of a communication line to a fixed telephone device may e.g. indicate that the LAN communication to the subscriber's domain is unintentionally out of order or e.g. that the subscriber has closed his fixed telephone (e.g. PC) down. However, it may also be the result of an action by the control means of the network, e.g. automatic transfer of incoming calls to the mobile communication device within the subscriber domain, if a timer device (e.g. a screensaver) has detected that the subscriber is, for instance, inactive at his work station and has probably left the work station.

### The figures

The invention will now be described in detail with reference to the drawings, in which
- fig. 1a: illustrates the basic principles of a preferred embodiment of the invention
- figs. 1b and 2a: illustrate some basic terms applied to describe the invention and variants of the invention below.
- figs. 3a-7a and figs. 3b-7b: illustrate the structure and signal flow in a network according to one embodiment of the invention,
- fig. 8: illustrates the local network setup of a preferred embodiment of the invention,
- fig. 9: illustrates a preferred method of controlling incoming calls according to a preferred embodiment of the invention,
- figs. 10a and 10b: illustrate possible functionalities of a manually and automatically operated attendant service, respectively.
- fig. 11: illustrates an individual user configuration tool according to a preferred embodiment of the invention, and
- fig. 12: illustrates a further preferred method of controlling incoming calls according to a preferred embodiment of the invention.

### Detailed description

Initially, it should be emphasized that the description below focuses on examples of the invention understandable to a man skilled in the art. Evidently, the examples should in no way restrict the scope of the invention from involving other exemplary devices/functions or combinations of devices/functionalities.

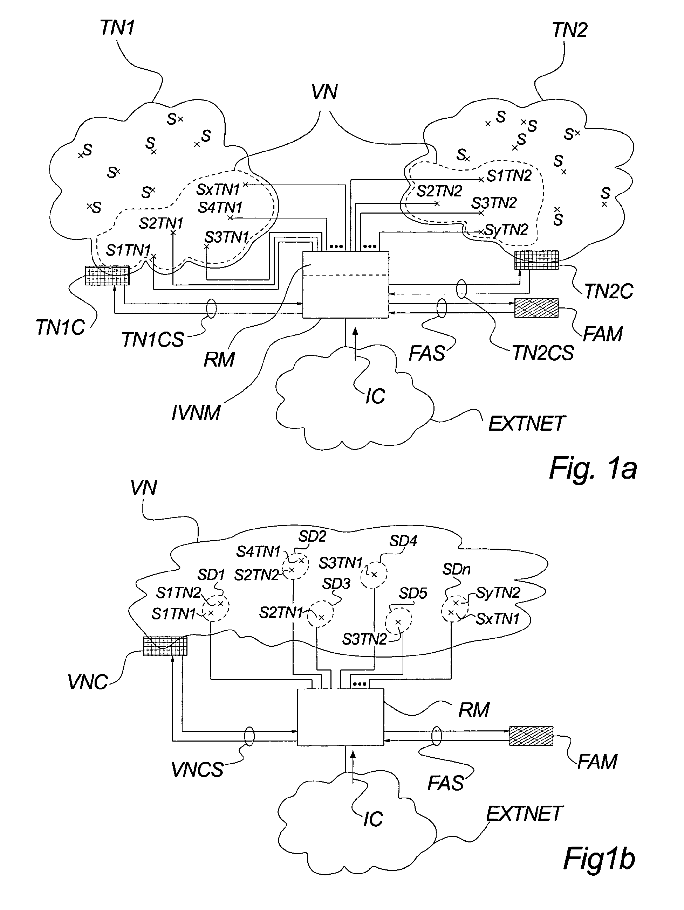

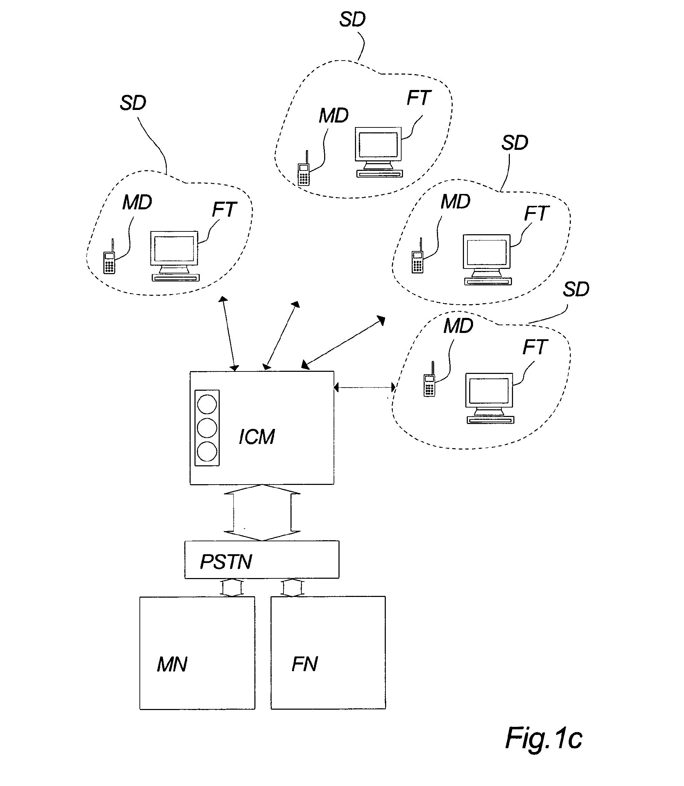

Fig. 1a illustrates the basic principles of a preferred embodiment of the invention.

The figure illustrates a virtual telecommunication network VN according to the invention. According to the illustrated embodiment, the virtual telecommunication network VN is established by means of two different telecommunication networks TN1, TN2. Telecommunication network TN1 may e.g. comprise a fixed telecommunication network of telecommunication devices. More specifically, network TN1 may e.g. comprise a LAN-PBX telephone network or e.g. a standard local network established by means of a local analogue or digital switching.

A LAN-PBX system within the art may typically be referred to as a Local Area Network- Private Branch Exchange-system. Basically, a LAN-PBX state of the art system refers to a software-based PBX, system, i.e. a system wherein the different communication devices communicate voice on an IP-basis, i.e. by means of packet-based switching. Examples of packet switched networks may e.g. be the GPRS (General Packet Radio Service) or the UMTS (Universal Mobile Telephone System).

A non-packet-based switching system may typically be referred to as circuit switching. Examples of circuit switching may e.g. be a traditional GSM-based telecommunication systems GSM 900/DCS, 1800/PCS and 1900 systems or e.g. the CDMA radio system.

The illustrated telecommunication network TN1 may e.g. comprise a complete circuit-switched cellular network, e.g. a GSM system. This network comprises well-known central control systems and radio link-establishing base stations distributed over a relevant geographical area. The radio link may communicate with a number of subscribers (S, S1TN1, S2TN1,..,SxTN1). Hence, the subscribers (S, S1TN1, S2TN1,..,SxTN1) are basically controlled and monitored by the operators control system. The relevant control systems of telecommunication network TN1 may be referred to as "one" control system TN1C for reasons of simplicity. When dealing with a traditional GSM cellular network, components of such systems may include e.g. Home Location Registers (HLR) and Visitor Location Registers (VLR).

Status codes of those registers may typically comprise e.g. a subscriber covered by a network or not (reachable), subscriber is busy or IDLE, etc. All these status codes may, when properly interfaced, be accessed immediately with very little delay on a control signal basis.

Those registers may be applied for keeping track of the location of the individual subscribers of the network and for registration of the state of the subscribers.

The telecommunication network TN1 communicates with the "outside world" via other telecommunication networks, commonly referred to as PSTN. According to the invention, PSTN basically refers to a network applied for both digital, analogue and hybrid telecommunication networks.

The illustrated telecommunication network TN2 may e.g. comprise a local traditional PBX system. This system may e.g. include well-known central PBX switch-comprising control systems and a wired link to a number of subscribers (S, S1TN2, S2TN2,..,SxTN2). Hence, the subscribers (S, S1TN2, S2TN2,..,SxTN2) are basically locally controlled and monitored by the PBX control system TN2C. A typical local switch of the above-mentioned type may e.g. traditionally keep track of relatively few subscriber-relevant control data depending on the involved devices. Nevertheless one important parameter may be a subscriber-related IDLE/-busy signal. This control signal according to the invention should be available via suitable interfacing means. Again, a control signal benefits from the fact that such signal may be available with a very short and hardly measurable delay.

An intelligent virtual network manager IVNM comprises availability measuring means AAM. The availability measuring means AAM is established for communication with the control systems TN1C and TN2C and for retrieval of specific subscriber availability data TN1CS and TN2CS. These availability representing signals TN1CS and TN2CS may be processed and stored by suitable storing and data processing means associated with the intelligent virtual network manager (not shown). The data processing means may also utilize the retrieved control signals for establishment of availability estimates associated with the subscribers of the virtual network. Again, these estimates may be suitably stored and monitored by suitable storing and monitoring means associated with the intelligent virtual network manager IVNM.

A further very important function of the intelligent virtual network manager IVNM is to define a number of subscribers S1TN1, S2TN1,..,SxTN1and S1TN2, S2TN2,..,SxTN2 of the two illustrated telecommunication networks TN1 and TN2.

The intelligent virtual network manager IVNM comprises means for storing these subscriber definitions. The subscriber-defining data held by the intelligent virtual network manager IVNM may be applied for retrieval of the correct relevant subscriber availability control signals from the two networks TN1 and TN2. Moreover, the retrieved control data may be applied for establishment of virtual network monitoring, i.e. for establishment of availability estimates.

Such availability estimates may be applied for simple monitoring to relevant requesting parties, but they may also preferably be applied for support of virtual network routing. Hence, according to a preferred embodiment of the invention, the intelligent virtual network manager IVNM comprises routing means RM for routing incoming calls to specific virtual network VN subscribers.

The routing of a call to the virtual network, i.e. via one of the two available telecommunication networks TN1 or TN2, should be controlled by the routing means either by manual control or according to automatic routing routines.

Routing to the fixed network may e.g. be performed by means of or supported by the switching means of the local PBX system forming TN1.

Routing to the cellular network may e.g. be performed by a direct link to the cellular network.

Such routing may advantageously be supported by the established availability estimates, AE, e.g. by an operator user interface (not shown) which may support manual (operator) routing of incoming calls IC by means of relevant availability information.

Basically, the intelligent virtual network manager IVNM merges specific subscriber devices into one virtual network of subscribers. Moreover, the intelligent virtual network manager IVNM manages the control data and should preferably provide the data via suitable interfacing means to users with little or no transparency back to the original (real) networks TN1, TN2. Hence, a user should not be burdened with network specific information but should rather face a common functionality to all subscribers of the networks TN1, TN2.

Moreover, the intelligent virtual network manager IVNM may communicate with further availability monitoring means FAM for retrieval of further subscriber-relevant availability signals FAS. Such signals may e.g. be obtained by measuring means located e.g. on the premises of an enterprise, GPS related data, etc.
Basically, the additional availability signals should primarily be regarded as useful, but not mandatory add-ons to the necessary control signals.

An important prerequisite to the establishment of the above-described virtual network VN is that the intelligent virtual network manager IVNM may obtain control signals referring to the availability of the specified subscribers. In this way, an availability estimate may be provided irrespective of whether a subscriber is available via the first or the second network TN1, TN2.

According to a preferred embodiment of the invention, the intelligent virtual network manager IVNM may also organize the pin-pointed subscribers of the networks TN1, TN2 in a subscriber domain SD. A subscriber domain may e.g. be regarded as a bundle of telecommunication devices by means of which a certain person may be reached. As an example, a subscriber domain related to a certain person may e.g. comprise one fixed specific telephone operated by the second network TN2 and e.g. one cellular phone operated by the first network TN1. The intelligent virtual network manager IVNM may then determine under which conditions a subscriber should be regarded as available or not.

The above-described embodiment of the invention may feature up-front information to users of the system, be it a calling party trying to get in touch with virtual network subscriber or a user requesting availability information related to one certain subscriber or a group of virtual network subscribers.

Explanatory details with respect subscriber domains and applicable subscriber handling techniques are given below.

Evidently, further variants of the above-described embodiment may be applied within the scope of the invention.

One of the above-mentioned variants within the scope of the invention may e.g. be a virtual telecommunication network comprising three or more telecommunication networks instead the above-described two.

Fig. 1b illustrates some terms applied to describe the invention and variants thereof. Obviously, the introduced terms should in no way restrict the understanding of the invention as these terms are used in a broader sense later in the description.

The illustrated system comprises four of the above-mentioned subscriber domains SD, each comprising at least one so-called fixed telephone FT, e.g. a LAN-PBX telephone or a traditional fixed phone, and e.g. at least one associated mobile telephone MD.

The four subscriber domains SD communicate with the ambient telecommunication network via an intelligent call manager ICM. The nature of the communication will be described in detail below.

The ambient telecommunication network comprises at least one control server distributing the telecommunication network signals between the mobile network and the fixed network.

According to the invention, a fixed network is a network addressing the wired telephones of the network, whereas the mobile network is a network addressing the wireless telephones.

Some aspects of the invention may be explained in detail by looking at the mobile network.

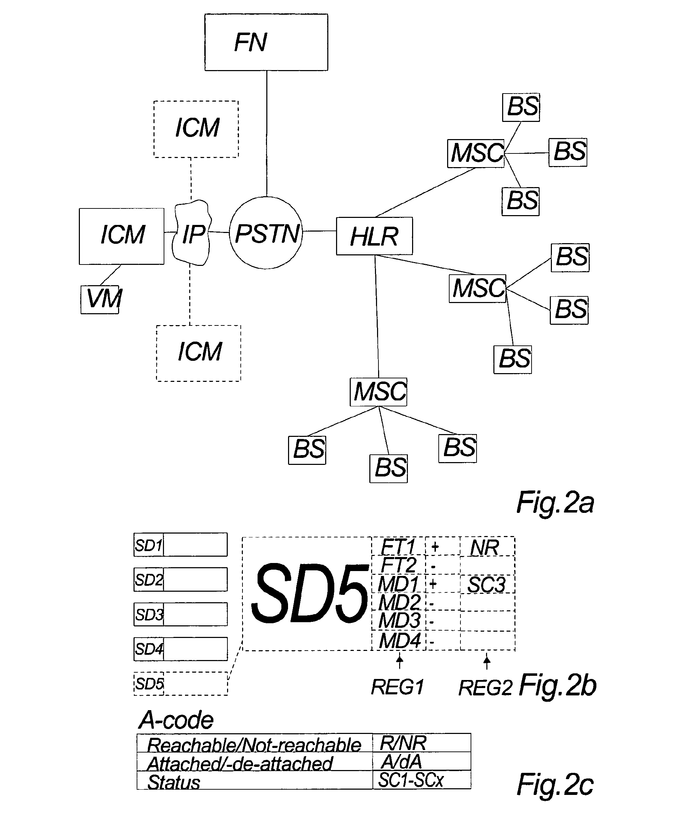

Fig. 2a illustrates the basic components of the network described in fig. 1b, but now it focuses on the components of the mobile network.

The above-mentioned intelligent call manager ICM is connected to a number fixed local telephones FT. The connection may typically be wired, but may also include wireless or partly wireless connections, e.g. a DECT telephone which may be regarded as a fixed telephone. The intelligent call manager ICM represents some sort of gateway from the ambient telecommunication network to a number of subscribers. In other words, the intelligent call manager ICM administers a number of subscriber domains, each subscriber domain comprising at least one fixed telephone, e.g. FTx, and an associated mobile telephone, e.g. MDx.

The illustrated intelligent call manager ICM is connected to a Public Switched Telephone Network, PSTN e.g. via an Internet Protocol, IP.

The PSTN functions as a node between a fixed network FN and a mobile network MN, e.g a GSM network.

It should be noted that both the mobile and the fixed networks may typically include several different networks.

The mobile network comprises a home location register HLR communicating with a number of mobile switching centers MSCs, each mobile switching center MSC communicating with a number of distributed base stations BS.

The base stations BS comprise the radio interface from the fixed part of the mobile network to a number of mobile devices MD.

As stated above, a subscriber domain administered by the intelligent call manager comprises both a fixed telephone FT, e.g. FTx, and a mobile device MD, e.g. MDx. Evidently, this administration needs some kind of communication between the intelligent call manager ICM, and the fixed/mobile network.

It should be noted that the ICM controls or manages a virtual "local" network of telephones and that several different ICM controls may be connected to the PSTN via e.g. the Internet Protocol, IP, as illustrated on the drawing. The term virtual should be understood in the sense that fixed telephones are typically locally or at least more or less directly wired to the ICM, whereas mobile devices are only virtually connected to the fixed telephones of the physical local network by means of the ICM.

It should, moreover, be noted that the mobile subscribers may be associated with an ICM independently of the physical location of the subscriber.

Finally, the ICM communicates with a local voice mailbox (VM) forming the voice mail box of the individual subscriber domains. Evidently, the ICM may be supported by alternative configurations of mailboxes (not shown), e.g. by applying the voice mailbox to the mobile devices.

Fig. 2b illustrates possible components of an ICM in the above-mentioned network according to one embodiment of the invention.

First of all, the ICM comprises a configuration setup defining a number of subscriber domains managed by the intelligent call manager ICM.

The intelligent call manager comprises a number of registers defining the subscriber domains SD1 - SD5 of the ICM. Evidently, the domains may be established in several other possible ways within the scope of the invention and the number of subscriber domains may be chosen so as to fit the available hardware and the wishes of the customer.

Fig. 2b illustrates a particular, possible configuration of a subscriber domain SD5. According to the illustrated and chosen design of the ICM, the subscriber domain SD5 comprises a fixed telephone FT1 and a mobile device MD1 defined by the REG1 column. Moreover, the fixed telephone and the mobile device are defined by a device-specific number (not shown). With respect to the mobile device, such device number may e.g. be the mobile telephone number of the device.

Moreover, the register comprises a column REG2 defining the current state of the subscriber domain SD5 by means of availability codes A-codes.

One of many possible implementations of A-codes within the scope of the invention is disclosed in fig. 2c.

The listed Availability codes comprise a reachable/not reachable indicator R/NR, an attached/de-attached code A/dA and a status code SC1-SCx.

The status code may e.g. be A Busy; subscriber busy and calling party, B Busy; subscriber Busy - not calling party, IDLE; subscriber is idle, Fault; subscriber is in fault mode, TEST; subscriber is in test mode.

Evidently, other status codes may be chosen within the scope of the invention, and the status codes are typically chosen within e.g. the above-mentioned set of codes if the availability of a mobile subscriber has to be monitored, while other codes may be chosen to represent the status of a fixed telephone.

Nevertheless, for illustrative purposes, the above-mentioned embodiment may use the same set of codes despite the fact that the term reachable/not reachable is more or less meaningless when dealing with fixed telephones according to the common understanding of the term within the field of mobile telecommunication.

Now returning to fig. 2b, the third column monitors the status of the devices of the subscriber domain SD5. Thus, the fixed telephone FT1 representing e.g. a LAN-PBX telephone of the subscriber is not reachable, NR. Moreover, the third column indicates that the mobile device of the domain SD5 is IDLE.

Consequently, the subscriber SD5 is available, and an incoming call may be routed to the subscriber domain automatically or manually.

As illustrated above, the mobile device and the fixed device of the subscriber are "melted" together in one domain. This complete integration between the involved devices of a domain offers many benefits, such as:
- an incoming call may be routed directly to a telephone in the subscriber domain,
- an operator (if the ICM is manually operated) may inform the calling party whether the called party is actually available,
- the calling party need not know the configuration of the subscriber domain (e.g. the telephone number of the mobile device(s) within the subscriber domain), he only needs one telephone number.

The ICM may, moreover, comprise information defining the location of the voicemail of the individual subscriber domains. Moreover, this information should be supplemented by software controlling the time(s) at which an incoming call is directed to the voicemail instead of being routed to a human operator. Possible applications of the invention will be described later.

As mentioned above, the availability of the subscriber may be monitored by the intelligent call manager irrespective of whether the subscriber uses his mobile devices or fixed devices within his domain. This monitoring may subsequently be utilized for handling an incoming call.

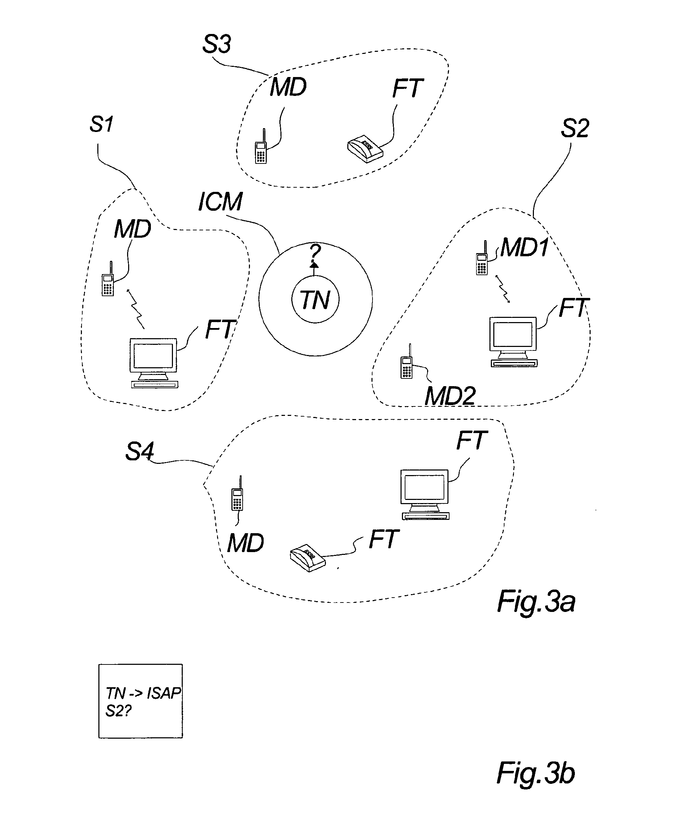

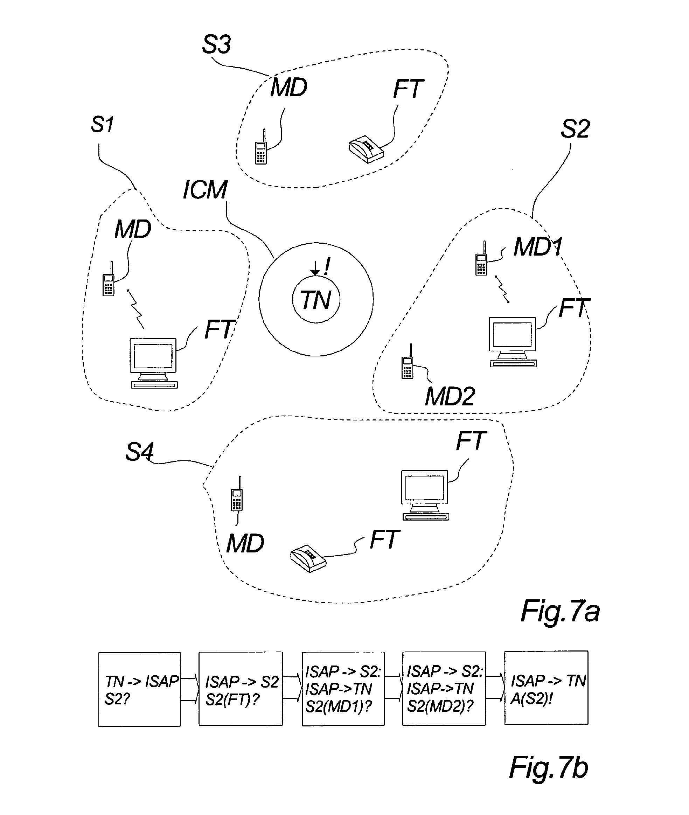

Figs. 3b - 7b illustrate a signal flow according to one embodiment of the invention implemented in a telecommunications network as illustrated in figs. 3a-7a. With reference to fig. 3a, the system comprises a number of subscriber domains S1 to S4.

The first subscriber domain S1 comprises a mobile device MD implemented as a mobile telephone, and a fixed telephone FT implemented as a LAN telephone. The fixed telephone FT may communicate via a Bluetooth link.

Evidently, the mobile device may be implemented as e.g. a standard mobile telephone, a WAP-device, UMTS-device, a GPRS-device or e.g. as a PDA comprising e.g. a GSM radio link.

The second subscriber domain S2 comprises a first mobile device MD1, a second mobile device MD2 and a fixed telephone FT implemented as a LAN telephone. The fixed telephone FT and the mobile device MD 1 may communicate via a Bluetooth IR link. However, the second mobile device MD2 is not directly linked to the fixed telephone FT.

According to the invention, the mobile device MD1 should be regarded as a fixed device when communicating with the LAN telephone but as a mobile device when communicating with the mobile network. A subscriber domain may consequently change nature from time to time. Such a domain may be regarded as a dynamic subscriber domain.

The third subscriber domain S3 comprises a mobile device MD and a fixed telephone FT implemented as a standard wired telephone. The fixed telephone FT and the mobile device are not directly linked.

Finally, the fourth subscriber domain S4 comprises a mobile device MD, a first fixed telephone FT1 implemented as a LAN telephone and a second fixed telephone FT2 implemented as a standard wired telephone. The fixed telephones FT1, FT2 and the mobile device MD are not mutually linked.

The four subscriber domains are all controlled by means of an intelligent call manager ICM. The platform ICM may e.g. be implemented on a local server, and the subscriber domains S1-S4 may typically be implemented in an office or as a complete corporate network.

The platform ICM manages the traffic to and from the subscriber domains S1-S4.

The platform ICM links the subscriber domains S1-S4 to a telecommunication network TN implemented according to fig. 1, i.e. comprising a wired network and a mobile telecommunications network, such as GSM.

The possible signal flow illustrated in fig. 3a will now be described with reference to fig. 3b.

Initially, the telecommunication network TN reports an incoming call to the intelligent call manager ICM. The call is intended for a second subscriber, i.e. the second subscriber domain.

With reference to fig. 3b, the telecommunication network TN asks whether (or how) the call may be delivered (S2?).

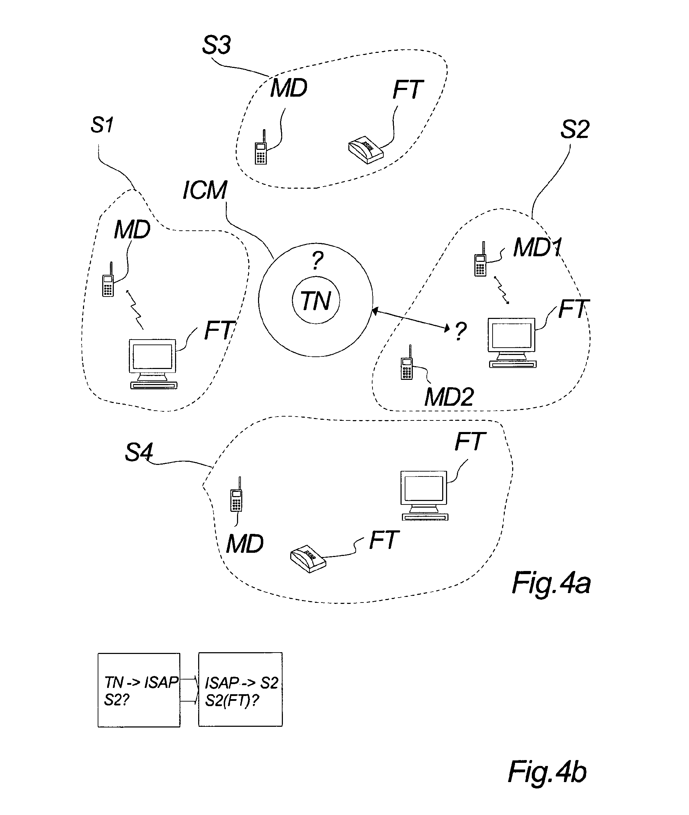

Turning now to fig. 4a and fig. 4b, the platform ICM checks whether the subscriber is available at the fixed telephone FT.

Availability is relatively easy to establish.

It should be noted that an ICM according to the illustrated embodiment would check the fixed telephone first, and the mobile devices secondly. Evidently, other possible checking sequences are possible within the scope of the invention.

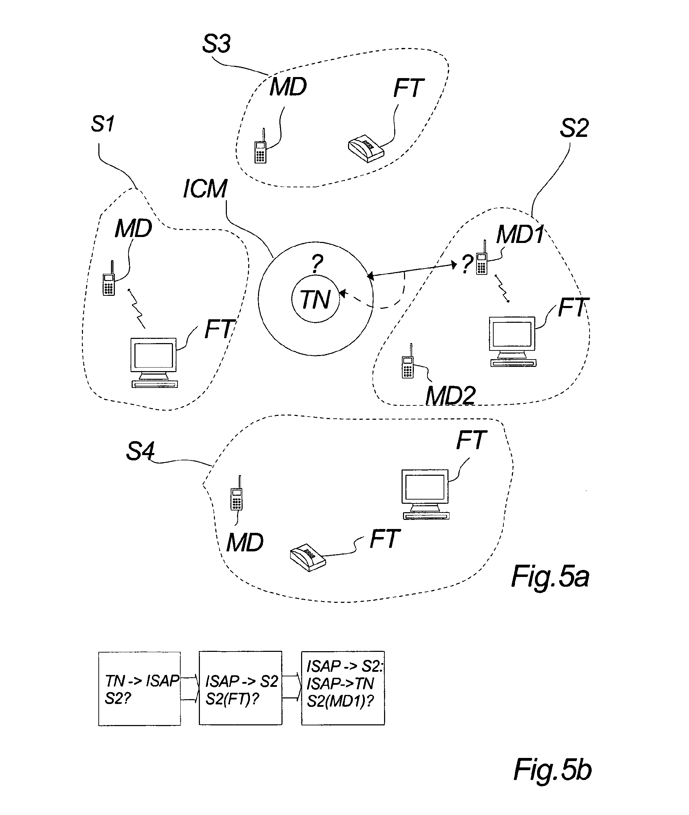

If the second subscriber is not available at the LAN-PBX telephone, the ICM will initiate a check on the mobile devices beginning with MD1 as illustrated in fig. 5a and fig. 5b.

This ICM platform may perform the availability check on the fixed device relatively easily in a local operation, as such an availability check may typically be deduced directly on the basis of the local LAN-PBX network. Availability of the fixed device may e.g. be determined by detecting the state of the screen-saver of the second subscriber's PC, whether the PC is actually turned on or simply whether the LAN-PBX link to the telephone is actually working. Preferably, the call should be routed to the fixed telecommunication device if the subscriber is available at this device. However, a call should be routed directly to another device (e.g. the mobile device) of the subscriber domain, if he is not available at the fixed device.

Determining whether the subscriber is available should preferably be made automatically.

Turning now to fig. 5a and 5b, the availability of the subscriber on the first mobile device is checked.

Compared with the previous step, this check is somewhat difficult due to the fact that the ICM returns a request to the telecommunications network TN in order to access the mobile network. The request is intended to clarify whether the subscriber may be reached via his mobile phone MD 1.

The availability status of the mobile device MD1 is returned to the ICM from the telecommunications network TN.

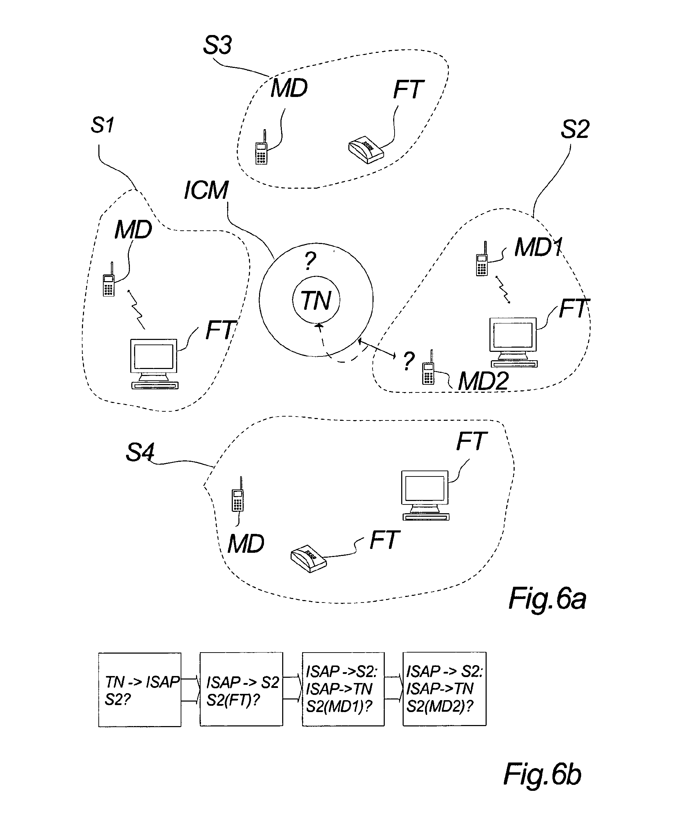

Likewise, the second mobile phone MD2 may be checked according to figs. 6a and 6b.

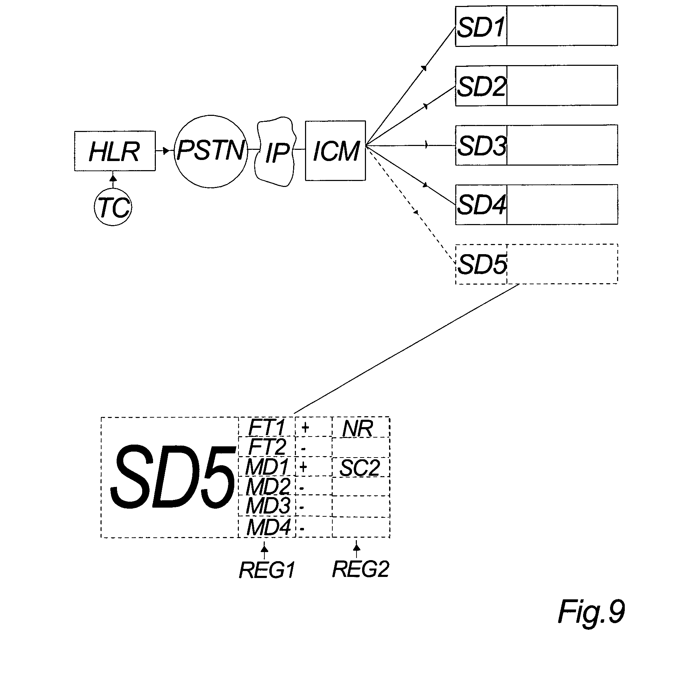

It should be noted that the availability of the mobile devices of the different subscriber domains may be updated in more or less convenient ways, e.g. by carrying out the above-mentioned request from the intelligent call manager ICM to the mobile network, or more advantageously, by an automatic update of the ICM registers being performed when changes in the availability of the mobile devices in the mobile network occur. This update method is described in fig. 9.

Finally, the ICM platform may return the status (AS2) of the second subscriber domain S2 by informing the caller (e.g. by means of a manually operated switchboard system) that the second subscriber cannot be reached neither via his fixed telephone nor via his mobile devices.

Evidently, the incoming call should go directly to the second subscriber domain if the subscriber is actually available.

Evidently, several modifications within the scope of the invention may be applied with respect to the actual way of handling the incoming call depending on the desired functionality.

Hence, an incoming call may be handled completely automatically as the ICM may automatically direct the incoming call to the available second subscriber device, if any, or automatically inform the caller that the subscriber is temporarily or permanently unavailable and then direct the call to the answering machine of the second subscriber or perform another action matching the established degree of unavailability.

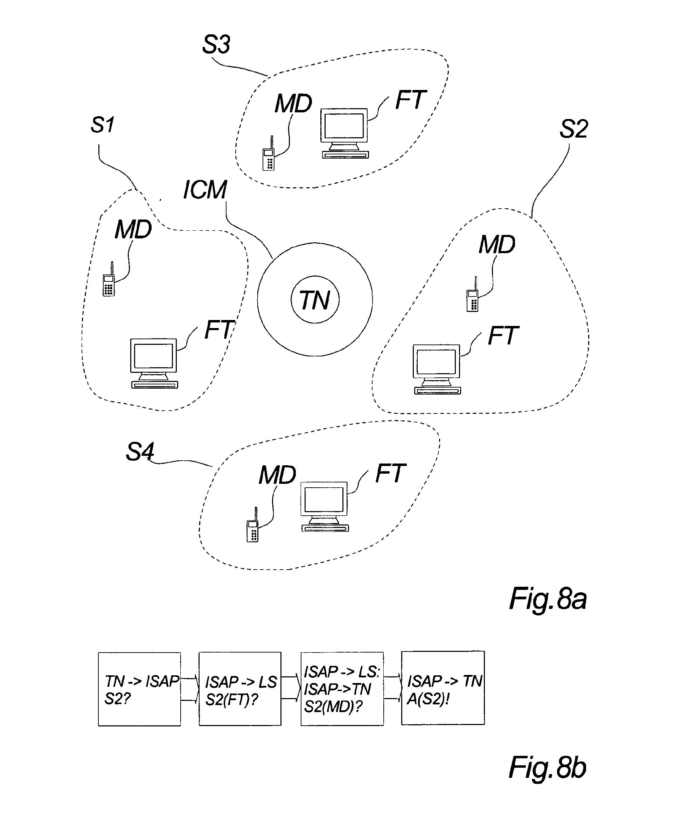

Fig. 8 illustrates the network setup of a preferred embodiment of the invention.

The preferred network setup involves a number of subscriber domains, each domain comprising a LAN-PBX telephone FT and a mobile telephone MD. According to the illustrated embodiment, no Bluetooth link is established between the fixed telephone FT and the mobile device MD.

However, such a Bluetooth link may advantageously be applied according to other embodiments of the invention.

The ICM basically controls the local network according to the above-mentioned method. Evidently, numerous methods and variants of such methods may be applied within the scope of the invention.

One variant of the platform implemented in the above-mentioned mobile telephone/LAN-PBX network according to the invention is a fall-back communication link-restoring control.

This function implies that the PSTN monitors the state of the LAN-PBX to the complete local system. If a failure in the LAN-PBX is detected, the PSTN may restore communication to the subscriber domain via the mobile radio link of the applied mobile telephone.

Such restoration of communication to a desired subscriber domain may e.g. be established by re-routing to the mobile telephone of the subscriber domain. Such re-routing typically implies that communication from the PSTN to the ICM is not possible and is therefore directed to the mobile device. Evidently, less convenient methods may be applied according to further variations of the invention, such as call forward typically implying that the incoming call is routed to the mobile device via the ICM.

### ICM protocol

The protocol may e.g. define the checking priority, i.e. a priority defining the sequence according to which the telecommunication devices of the subscriber should be checked and eventually accessed.

The ICM may basically be implemented primarily as a local network control illustrated in the embodiment in figs. 3a-7b. Evidently, the platform may be implemented centrally in the sense that a server may be located centrally, e.g. in a GSM network operating the mobile devices included in the subscriber domains.

### Availability

Several methods may be applied to determine availability of the subscriber within his domain.

One method implies a first check at the fixed telephone(s) FT, e.g. a LAN-PBX telephone. Such check may e.g. be performed by means of a sensor arranged at the subscriber's PC, i.e. the LAN-PBX telephone. Other possible availability checks may e.g. be facilitated by means of a manual availability setting by the subscriber. Hence, the user may actively send a message to the ICM, indicating whether he is available at the fixed telephone or not. According to a preferred embodiment of the invention, the availability status of the subscriber on a fixed telephone (LAN-telephone) is determined by checking the screensaver of the subscriber's LAN-PBX terminal.

This ICM platform may perform the availability check on the fixed device relatively easily by a local operation, as such an availability check may typically be deduced directly on the basis of the local LAN-PBX network. An availability check may e.g. be carried out by determining the state of the screen-saver of the second subscriber's PC, whether the PC is actually turned on or simply whether the LAN-PBX link to the telephone is actually working.

A further way of establishing or offering supplementary information regarding the availability of the fixed subscriber may e.g. be made by utilizing a card reader (e.g. a standard card key applied for admittance control) with the purpose of determining whether the subscriber is actually available at the office or not.

Correspondingly, the availability of a subscriber on a mobile device may be determined in several different ways within the scope of the invention. According to a preferred embodiment of the invention, the availability of the subscriber at the mobile device may be determined by checking whether the mobile telephone is within the area reachable by the mobile network. This check may e.g. be supplemented by the inherited understanding that if the power is off, the subscriber is in a meeting or the like, i.e. temporarily not available, but actually present. Evidently, numerous syntaxes defining subscriber acts and combinations of acts may define the state of the subscriber.

Other availability criteria may be established by other measures and combinations of measures. Thus, an availability criterion of "not available - I'm in a meeting" may e.g. be established by turning the mobile telephone off.

### Attendant service area

The attendant service area of the ICM platform may likewise imply several different understandings of switchboard systems but should generally define the interface between the subscriber domains controlled by the ICM platform and the remaining network TN and vice versa.

The switchboard system may be partly or completely automated.

Such an interface may e.g. include an ICM receptionist having a switchboard system monitor, according to which the availability of a subscriber may be determined. Such a switchboard system monitor may e.g. show to a switchboard operator whether the subscriber is available and preferably also indicate the degree of unavailability. The degree of unavailability may e.g. be expressed as a statement determining whether the subscriber is actually present, but temporarily not available. The "temporarily not available" state may e.g. be established by the subscriber by turning the mobile telephone off while the subscriber's PC (LAN-PBX) is on.

If the subscriber has turned his PC off and the mobile phone is not within the area covered by the network or simply turned off, the subscriber is simply not available.

If a receptionist operates the switchboard system partly manually, the receptionist may simply switch an incoming call to a subscriber's mobile telephone if the subscriber is not available on the fixed telephone but available on the mobile phone. However, if the subscriber is not available, the receptionist may receive a message or link the incoming call to the answering machine of the subscriber.

Again, the calling party is spared information like "..no - he is not available right now, - but I can give you his mobile number. May be his mobile phone is on.."

It should be noted that the ICM, according to the illustrated embodiment, would check the fixed telephone first and the mobile device(s) secondly. Evidently, other checking sequences are possible within the scope of the invention.

If not available, the receptionist may inform the caller of the degree of unavailability of the called subscriber.

The advantage hereof is that the receptionist may offer specific information about the state of the subscriber instead of just switching the incoming call to an answering machine without checking whether the subscriber is actually available or not.

Fig. 9 illustrates a preferred method of updating an intelligent call manager ICM according to a preferred embodiment of the invention.

The update of the intelligent call manager of the invention is important due to the fact that a suitable update of the ICM ensures that the availability of the subscriber may be established swiftly and in a reliable manner.

According to the illustrated embodiment, a trigger circuit TC is associated with the home location register HLR. As mentioned in fig. 2a, the HLR communicates with the intelligent call manager ICM via the PSTN and an Internet Protocol connection according to an example of the invention. Evidently, the HLR may communicate with the ICM in numerous other ways within the scope of the invention if so desired.

According to the present preferred embodiment of the invention, the trigger circuit TC controls and triggers the transfer of availability-describing data from the mobile network to the intelligent call manager. Obviously, the mobile network may also transfer availability-describing data to a large number of different ICMs. Likewise, many different networks may work together in order to provide the necessary availability data to the intelligent call manager.

According to the illustrated embodiment of the invention, the HLR should only initiate transfer of availability data to the intelligent call manager ICM if a change in the subscriber domain SD data has occurred.

Other possible trigger mechanisms may e.g. be established on the basis of combinations of different trigger criteria such as timer-controlled triggering and event-based triggering.

A possible trigger mechanism may also be a request from the ICM to the HLR regarding the availability of a mobile subscriber or a group of subscribers managed by an ICM, and the request may e.g. be triggered by an incoming call to a subscriber having a domain administered by the ICM.

According to the illustrated embodiment, the trigger circuit has acknowledged a change in the availability status of a mobile subscriber (a mobile device) as the mobile device is no longer IDLE as described in fig. 2b but busy (SC2=B Busy: subscriber busy, subscriber not the calling party). This change is now communicated to the intelligent call manager ICM administering the subscriber domain SD5 incorporating the mobile device, and the ICM modifies the register accordingly (i.e. from IDLE to SC2).

Now, the ICM may manage incoming calls accordingly, e.g. by routing incoming calls to a voice mail associated with the subscriber domain or by e.g. offering the calling party to have the call cued until the subscriber S5 is available.

Such management may be performed manually or automatically.

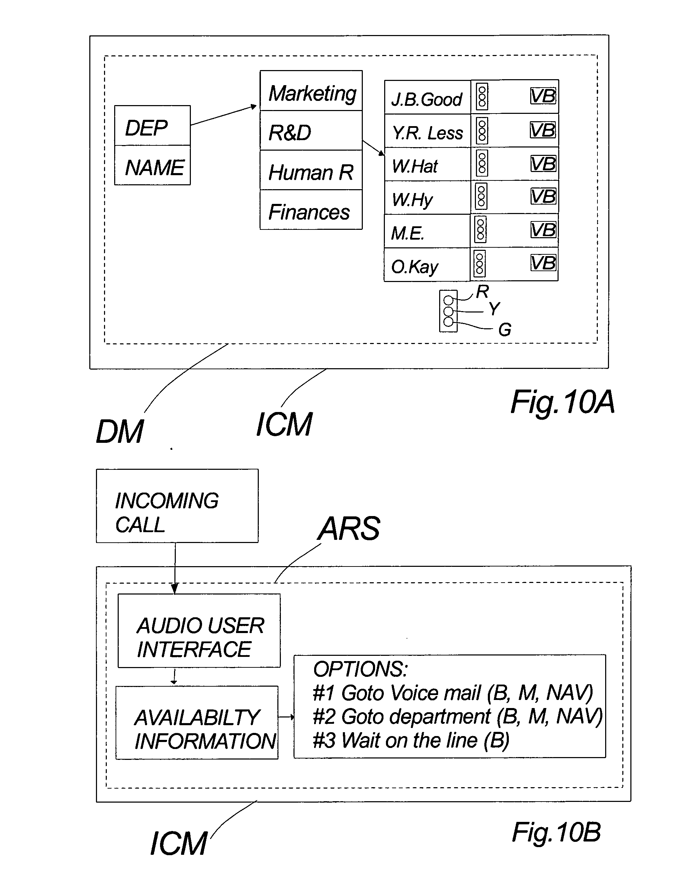

Turning now to fig. 10a, the setup of a manually operated attendant service according to an embodiment of the invention is illustrated.

The attendant service may e.g. comprise display means (DM). The display means are adapted to displaying the availability data to the operator in a suitable way. Evidently, the display means communicates with the aforementioned intelligent call manager ICM.

According to the illustrated sequence, a calling party has asked for a person in R&D. The operator selects the R&D department from a list of departments DEPL, and a list of persons working in the R&D department appears.

The illustrated list comprises a list of names associated with a simple "traffic light" coding: red, yellow and green, R, Y, G.

The persons marked with green are immediately available and the operator may route the incoming call directly to one of these persons, the persons marked with yellow are at the office, but in a meeting, and the persons marked with red are not available neither on their fixed telephones nor on their mobile devices.

The operator may then route the calling party to a voice mail of one of the persons by selecting a voicemail button VB.

The information to be displayed by the display means may be synchronized with calendars and schedules associated with the individual subscriber or a group of subscribers, e.g. the entire company.

Fig. 10b illustrates an automatically operated attendant service according to a further embodiment of the invention.

The illustrated sequence illustrates possible routings of an incoming call to a specific subscriber, i.e. subscriber domain.

The illustrated automatic routing system ARS based on the Intelligent Call Manager ICM deals with four different availability measures: busy B, meeting M, available AV and not available NAV.

If a calling party has dialed the number of a subscriber who is not available, the ARS may inform the calling party orally by means of an automatic Audio User Interface that the called party is either busy B at a meeting or simply not available NAV.

If the called party is busy B, the calling party may be offered to hold the line in a couple of minutes #3.

If the called party is in a meeting or not available, the calling party may be offered to speak to another available person within the department #2, or to be routed to the voicemail box of the called party.

Evidently, many other possibilities of exploiting the availability information offered by the ICM are applicable within the scope of the invention.

Thus, an advantageous feature of the invention is that the calling party of an incoming call may be handled according to actual availability and not just according to the assumption of the subscriber being reachable at his mobile number.

It should be emphasized that the above-mentioned embodiment may be subject to several variations within the scope of the invention.

It should be noted that the described way of routing a signal from one telecommunication device within one domain to another device within the same domain may sometimes be supplemented by a customized option of a preprogrammed shift from one domain to another domain if certain availability criteria are met. Thus, under certain circumstances, an incoming call may be handed over to another subscriber domain if so desired.

A virtual "local" network according to the invention may typically comprise a number of subscribers ranging from anywhere between 2 to several hundreds (or thousands).

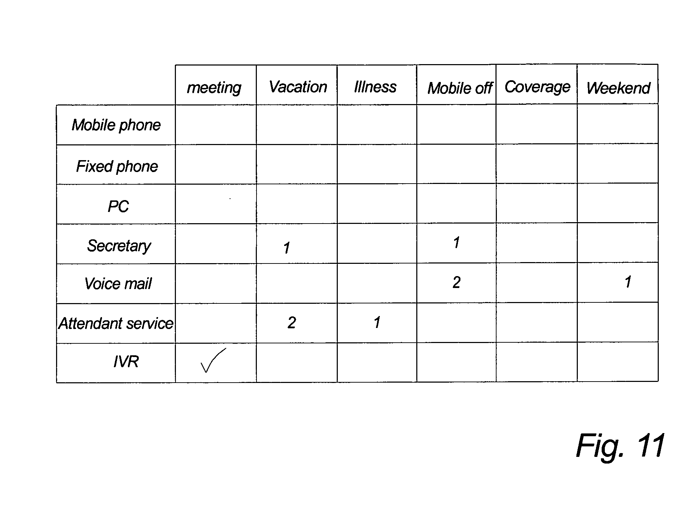

Fig. 11 illustrates a further feature of an embodiment of the invention.

According to the invention, a common understanding of two communication devices of two different types of telecommunication networks has been established.

Several already described advantages are obtained due to the establishment of one common artificial network comprising the different types of devices. Moreover, the establishment of so-called subscriber domains may be applied with the purpose of providing improved flexibility to a subscriber who may be reached in person by means of more than one telecommunication device and still maintain full control of the virtual network which may already be applied by means of e.g. local PBX-switches.

The improved personal flexibility introduces a further challenge to the management of the local network, namely that of minimizing the annoying intrusion to the subscriber domain under circumstances where the subscriber actually prefers not to be available. Such situation may e.g. occur when a person of a subscriber domain is at home, on holiday, is ill, etc. I.e. circumstances where the improved flexibility of the invention potentially induces unintended side effects.

Fig. 11 illustrates a so-called individual user configuration IUC. The individual user configuration IUC enables a user associated with a subscriber domain to establish his own setup.

The setup of the user configuration IUC may typically be supported and established by means of a user interface offered by the data processing means associated with the intelligent virtual network manager IVNM.

The illustrated setup enables the user to tag desired re-routing of incoming calls or e.g. an availability request if certain conditions are met.

Hence, the user configuration may invoke automatic routing routines according to the user-input in the user configuration IUC. Evidently, the setup may also be applied as a support to an attendant.

According to the illustrated embodiment, the column on the far left comprises available destinations within a specific subscriber domain. Mobile phone, fixed phone, PC, secretary, voice-mail, attendant service, and an IVR represent the available options according to the illustrated embodiment.

The resulting actions determined by the illustrated individual user configuration will be briefly summarized below.

The IVR is an information monitor combined with selections made available to the requesting party, e.g. a calling party. An IVR may e.g. be when a destination is tagged: meeting as a triggering event: "You have called Alf, but I am in a meeting. Press 1 to leave a message in the voice mail box or press 2 to connect to my mobile telephone".

If an incoming call appears during vacation time, the call should be directed to a secretary (primary routing indicated by a "1"), and if the secretary is not available, the call should finally be directed to the attendant service of the virtual network. It should be noted that routing according to the invention and the above-mentioned schedule may typically be performed quite smoothly due to the fact that routing may be established in accordance with the routing routine of the invention. Hence, if the secretary is not immediately available according to the previously established availability estimate AE related to the secretary, the call or request is instantly routed to the attendant service (secondary routing indicated by and "2").

Hence, incoming calls may, when on or several triggering events are established be routed according to a defined sequence of actions. The sequence may comprise prioritized actions, as the above described primary and secondary routings)

If an incoming call appears when illness is reported, the call may be directed directly to the attendant service indicated by a "1 "-tag.

If an incoming call appears when the availability estimate indicates that the subscriber is unavailable at his fixed phone and not covered by his mobile telephone, the call will primarily be routed to the secretary ("1"-tag) and secondarily routed to the voice mail ("2"-tag).

If an incoming call appears during the weekend, the incoming call may be routed directly to the subscriber's voicemail. Again, if the secretary is not available according to the previously established availability estimate, AE, related to the secretary, the call is directed instantly to the voice mail.

The upper row defines a number of possible triggering events. The triggering event must be measurable in order to qualify as a triggering event due to the fact that a triggering event, when tagged to a certain destination in the configuration setup, should automatically result in the routing being determined by the user configuration tags. Typically, all options should result in at least one destination.

The events may e.g. be measured as so-called further availability signals FAS, e.g. retrieved by computer-based calendar systems such as Outlook or the like.

Evidently, the GUI may be adapted to the desired level of user friendliness.

Evidently, the triggering events and the destinations available for user configuration may vary within the scope of the invention.

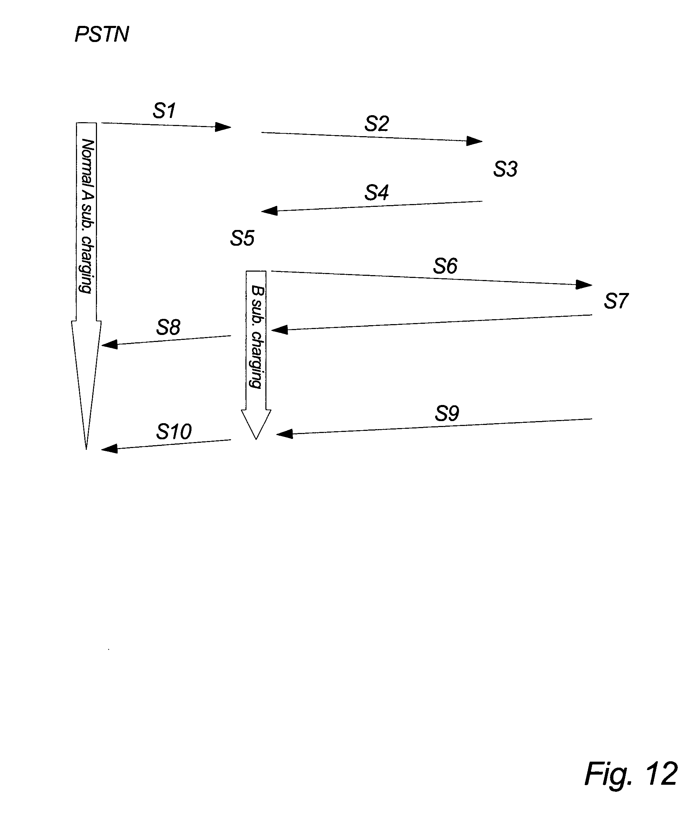

Fig. 12 illustrates one of several call-handling routines according to the invention.

The illustrated routines illustrate how a call may be directed by a virtual network between two telecommunication networks, a mobile subscriber telecommunication network MSN and a local switch, in this case a LANPBX.

Evidently, other types of networks may be applied within the scope of the invention.

Initially in step 1, S1, an incoming call is established from the PSTN. As indicated by the arrow, step 1 also initiates normal A-subscriber calling, i.e. charging of the calling party. The call is initially handed over to an intelligent virtual network manager IVNM supporting the relevant called virtual network in step 2, S2. Subsequently, in step 3, S3, the availability estimates are investigated, etc. According to the illustrated embodiment of the invention, the result is that the intended recipient is available on a mobile device. Therefore, the call is re-routed to the mobile subscriber network, MSN in step 4, S4. Moreover, the call is handed over to the MSN by a CC=31 command invoking release of the call from the local LAN-PBX to the mobile subscriber network. Other clear codes CC than code 31 may be advantageously be applied within the scope of the invention. Hereby, tromboning is avoided. The basic idea is that the call should preferably be re-routed from the virtual network instead of forwarded. Thereby, the call is switched to the other network (in this case the MSN).

If the call-handling implies e.g. that the local switch comprises an old PBX not supporting call-handling with release to the other, e.g. the illustrated MSN (CC=31), the call should simply to be forwarded in the traditional manner, i.e. be established via the PBX.

In step 5, S5, the call is re-routed within the MSN and the virtual network is charged accordingly as illustrated by the arrow. In step 6, S6, a call is established and in step 7, S7, the recipient answers the call, i.e. a B-answer is established to the A-call according to step 8, S8. In step 9, S9, the call is terminated and a release (CC=0) is now established by the virtual network, whereby the call and the B subscriber charging are terminated. Moreover, a release (CC=0) is established in step 10, S 10, and the A-subscriber charging terminated.

It should be noted that the above-illustrated handling-routine during normal operation according to the invention may typically avoid switching to the MSN if the mobile device within a subscriber domain is determined to be unavailable in step 3.

Evidently, many variants of the above-illustrated routines may be established within the scope of the invention.

### Subscriber domain monitor

An ICM, also called a virtual telecommunication network monitors the state of a bundle of subscriber domains.

An ICM provides initial availability information to a user of the ICM
user may be an operator
user may be an incoming caller
availability information is comparable estimates

### Subscriber domain switch

The ICM switches intelligently between the available communication devices in the subscriber domain.
- automatic switching between communication devices of different telecommunication networks within at least one of the said subscriber domains (DS)
   - detection parameters: mob on/off
   screensaver on-off
   auto
   - supported by: schedules-outlook-etc

## Claims

1. Switchboard system for managing incoming calls to a local network of subscriber domains (SD), at least one of said subscriber domains comprising at least one mobile communication device (MD)
said switchboard system comprising or communicating with means for automatically routing an incoming call according to predefined automatic routines depending on the availability of the called subscriber.

2. Switchboard system according to claim 1,
further comprising at least one fixed telephone (FT),

3. Switchboard system according to claim 1 or 2,
wherein said switchboard system comprises routing means (RM) for routing an incoming call (IC) to at least one of the said virtual network subscribers (VNS) according to the established availability estimates (AE).

4. Switchboard system according to any of the claims 1-3,
wherein said local network comprises a virtual telecommunication network (VN) being formed by a group of subscribers (SxTN1 ..........;VNS) of at least one mobile telecommunication network,
said virtual telecommunication network (VN) comprising availability measuring means (AMM),
said availability measuring means (AMM) being adapted to establishing availability estimates (AE) of at least one of the virtual network subscribers (VNS) in said at least one mobile telecommunication network on the basis of control signals provided by the control system of the said at least two telecommunication networks (TN1, TN2),
said availability measuring means (AMM) comprising interfacing means (IM) for interfacing said availability estimates (AE) to users of the virtual telecommunication network (VN).

5. Switchboard system according to any of the claims 1-4,
wherein said interfacing means (IM) comprises at least one operator interface (OI).

6. Switchboard system according to any of the claims 1-5,
said operator interface (OI) comprises means for establishment of monitoring signals (MS) representing availability estimates (AE) related to virtual network subscribers (VNS).

7. Switchboard system according to any of the claims 1-6,
wherein said routing routines (RR) are executed automatically by means of data processing means (DPM).

8. Switchboard system according to any of the claims 1-7,
wherein said routing routines (RR) are executed by at least one operator by means of said operator interface (OI).

9. Switchboard system according to any of the claims 1-8,
wherein said availability estimates (AE) are updated according to update routines (UR).

10. Switchboard system according to any of the claims 1-9,
wherein the destination of an incoming call (IC) to a subscriber of the virtual network (VN) is partly defined by a virtual network identifier (VNID), identifying the virtual network (VN), and partly defined by manual communication between the calling party (CP) and at least one operator of the virtual telecommunication network (VN).

11. Switchboard system according to any of the claims 1-10,
wherein said manual communication is established by means of automated means for providing virtual network subscriber information to the calling party.

12. Switchboard system according to any of the claims 1-11,
wherein the destination of an incoming call (IC) to a subscriber of the virtual network (VN) is partly defined by a virtual network identifier (VNID) identifying the virtual network (VN), and partly defined by a further virtual telecommunication network subscriber identifier (VSID) enabling automatic routing by the routing means (RM) to said identified virtual telecommunication network subscriber (VS).

13. Switchboard system according to any of the claims 1-12,
wherein said virtual network identifier (VNID) comprises a telephone number associated with said virtual telecommunication network (VN).

14. Switchboard system according to any of the claims 1-13,
wherein said further virtual telecommunication network subscriber identifier (VSID) comprises an extension telephone number.

15. Switchboard system according to any of the claims 1-14,
wherein said at least one virtual telecommunication network subscriber identifier (VSID) is established manually by an operator of an operator interface (OI).

16. Switchboard system according to any of the claims 1-15,
wherein said update routines (UR) involve regular polling of control signals (TN1CS; TNC2S) provided by the control systems of said at least one telecommunication network.

17. Switchboard monitoring system for monitoring availability of said at least one subscriber dedicated to a subscriber domain (SD), said subscriber domain comprising at least one mobile communication device (MD),
said switchboard system comprising display means (DM) for displaying availability of the at least one subscriber domain (SD).

18. Switchboard system according to claim 17,
wherein said subscriber domain further comprises at least one fixed telephone (FT)

19. Switchboard system according to claim 17 or 18,
wherein said routing means (RM) interacts with a scheduling routine (SR).

20. Switchboard system according to any of the claims 17-19,
wherein at least one subscriber domain (SD) is dynamically changed according to subscriber defining schedules (SDS).

21. Switchboard system according to any of the claims 17-20,
wherein at least one subscriber domain (SD) is controlled according to predefined subscriber domain handling routines (SDHR).

22. Switchboard system according to any of the claims 17-21,
wherein said system comprises an individual user configuration (IUC) which may be applied for individual subscriber setups of subscriber domains (SD).

23. Switchboard system according to any of the claims 17-22,
wherein a subscriber may determine the triggering event (TE) which results in an incoming call being directed to a certain destination (DEST) when established.

24. Switchboard system according to any of the claims 17-23,
wherein the triggering events may be automatically measured by measuring means associated with the intelligent virtual network manager IVNM.

25. Switchboard system according to any of the claims 17-24,
wherein the means for determining availability of at least one mobile communication device (MD) associated with at least one subscriber (S1,..,S4) comprises means for accessing availability codes (A-code) comprised by the mobile network.

26. Switchboard system according to any of the claims 17-25,
wherein said availability codes (A-codes) are comprised by a Home Location Register (HLR) of a GSM-network.

27. Switchboard system according to any of the claims 17-26,
wherein availability is weighted by further availability parameters.

28. Switchboard system according to any of the claims 17-27,
wherein the intelligent call manager (ICM) comprises display means (DM) for displaying the availability status of the subscribers (S1,..,S4) managed by said call manager (ICM).
